# EUROPEAN PATENT SPECIFICATION

(11) **EP 3 676 434 B1**
(45) Date of publication and mention of the grant of the patent: **18.12.2024**
(21) Application number: 18759117.7
(22) Date of filing: 29.08.2018
(51) Int. Cl.: D04H 1/4209, C09D 183/04, D04H 1/4218, D04H 1/64, D04H 3/002, D04H 3/004, F16L 59/14

(54) **USE OF A MINERAL WOOL PRODUCT**
VERWENDUNG VON MINERALWOLLPRODUKT
UTILISATION D'UN PRODUIT EN LAINE MINÉRALE

(30) Priority: 30.08.2017 EP 17188636
(43) Date of publication of application: 08.07.2020
(60) Divisional application: 24210741.5
(73) Proprietor: ROCKWOOL A/S, 2640 Hedehusene (DK)
(72) Inventor: ZWAAG, Claudia, 2640 Hedehusene (DK)
(74) Representative: Meissner Bolte Partnerschaft mbB
(86) International application number: PCT/EP2018/073273
(87) International publication number: WO 2019/043078

(56) References cited:
- WO-A2-2008/127936
- WO-A2-2008/127936
- CN-A- 104 402 211
- CN-A- 104 402 211
- US-A1- 2007 027 283
- US-A1- 2012 070 645
- US-A1- 2012 070 645
- US-A1- 2012 168 054
- US-A1- 2012 168 054

## Description

### Field of the Invention

The present invention relates to the use of a mineral wool product comprising mineral fibers bound by a binder resulting from the curing of a binder composition comprising a hydrophobic agent comprising at least one silicone compound at least one hardener and at least one emulsifier, as insulation of a metallic structure. The present invention is also directed to a mineral wool product comprising mineral fibers bound by a binder resulting from the curing of a binder composition.

### Background of the Invention

Corrosion is the deterioration of a metal as result of a chemical reaction between it and the surrounding environment. Corrosion involves the conversion of the metal to a more chemically stable form, such as oxide, hydroxide or sulfide.

Corrosion of steel occurs in the presence of water and oxygen. Corrosion of steel parts is a major economic problem, which often times makes up a major part of the maintenance and renewal costs of steel structures.

A very specific problem is the problem of corrosion under insulation (CUI) which affects steel parts, which are thermally isolated by an insulating material. Steel structures are often insulated in order to avoid heat loss. Such a thermal insulation might be desirable for steel structures, which are much warmer or colder than their surrounding environment. CUI occurs in particular under insulation for steel structures which undergo cyclic temperature changes like e.g. pipelines in the oil and gas industry.

Since corrosion of steel occurs in the presence of water and oxygen, the presence of water in contact with the steel structure is a major factor contributing to corrosion. Since thermal insulation, materials surrounding the steel structures in order to avoid heat loss tend to keep water in contact with the steel structure for a longer time than the contact would last without the surrounding insulating material, such insulating materials can contribute to increased corrosion. Steels are in general susceptible to CUI in the temperature range of 0 °C to 175 °C. The most frequently occurring types of CUI are general and pitting corrosion of carbon steel which may occur if wet insulation comes in contact with carbon steel, and external stress corrosion tracking (ESCT) of austenitic stainless steel, which is a specific type of corrosion mainly caused by the action of water-soluble chloride from rain water or if the insulation is not meeting the appropriate requirements. Since the corroded surface is mostly hidden by the insulation system and will not be observed until the insulation is removed for inspection or in the event of metal failure leading to incidents, it is very important to control CUI as much as possible.

In order to avoid CUI, the insulated steel structures are often covered by an additional cladding, which is to prevent the entering of water. However, experience shows that water often enters via fault or damages in the cladding system or via humid air in structures, which undergo cyclic temperature changes. Water may also come into contact with the steel structure internally from non-tight fittings or externally from events like flooding.

In order to avoid CUI, steel structures like pipelines in the oil and gas industries are often protected against corrosion by coating the steel parts with a protective layer, e.g. with other metals like zinc or aluminum. However, such coating layers are never a completely protecting layer and these protective measures can be extremely cost-intensive and might be economically unacceptable for extensive pipeline systems.

There have been previous attempts to use mineral wool products as insulation of metallic structures and still protect them from CUI. The most common way to reduce CUI is by use of a mineral wool product prepared from a mineral wool binder to which a mineral oil has been added. By adding mineral oil, the water repellent requirements according to EN13472 can be met. However, for these mineral wool products, the inhibition of CUI is still not satisfactory, because the water absorption is still too high. In addition, these mineral wool products used as insulation materials suffer from the disadvantage that when exposed to higher temperatures, the water absorbance quickly raises to unacceptable levels. This is in particular a problem for the use of such insulation materials for insulating pipelines in the oil and gas industry since in these pipelines operating temperatures often exceed 150°C. Under these conditions, the water repellent properties of these insulation materials are quickly lost.

The problems associated with CUI can be so serious, that some companies choose to avoid thermal insulation of pipelines even though this leads to a highly energy-inefficient operation.

WO 2008/127936 A2 relates to composite Maillard-resole binders to produce or promote cohesion in non-assembled or loosely assembled matter.

US 2012/168054 A1 relates to dispersions of reactive polysiloxanes which are applied to fibrous products, such as construction panels to provide improved properties, like better resistance to staining and discoloration and better adhesion of facer layers.

### Summary of the Invention

Accordingly, it was an object of the present invention to provide an insulation of a metallic structure that allows effective thermal insulation of such a structure and at the same time minimizes maintenance costs and optimizes durability of the structure.

In particular, it was an object of the present invention to provide an insulation of a metallic structure that allows effective thermal insulation of such a structure and at the same time minimizes corrosion of the metallic structure.

It was a further object of the present invention to provide a mineral wool product prepared with a binder composition.

In accordance with a first aspect of the present invention, there is provided the use of a mineral wool product comprising mineral fibers bound by a binder resulting from the curing of a binder composition comprising a phenol-formaldehyde-based resin, and/or a carbohydrate containing component, a hydrophobic agent comprising (i) at least one silicone compound, such as silicone resin, such as a reactive silicone resin, such as a reactive silicone resin chosen from the group of polyalkylethoxysiloxane, polymethylethoxysiloxane, polyphenylethoxysiloxane, polyphenylsiloxane, polyphenylmethylsiloxane, and (ii) at least one hardener, such as silane, such as alkyltriethoxysilane, such as octyltriethoxysilane, and (iii) at least one emulsifier, as insulation of a metallic structure, said structure having an operating temperature between 70-650 °C, wherein the hydrophobic agent comprises (i) in an amount of 20 to 90 percent by weight, in particular 30 to 60 percent by weight, based on the weight of the hydrophobic agent, and (ii) in an amount of 0.5 to 10 percent by weight, in particular 1 to 5 percent by weight, based on the total weight of the hydrophobic agent, and wherein the mineral wool product comprises the hydrophobic agent in an amount of 0.05 to 2 percent by weight, such as 0.10 to 1 percent by weight, such as 0.15 to 0.8 percent by weight, based on the weight of the mineral wool product.

In accordance with a second aspect of the present invention, there is provided a mineral wool product comprising mineral fibers bound by a binder resulting from the curing of a binder composition comprising a phenol-formaldehyde-based resin, and/or a carbohydrate-containing component, a hydrophobic agent comprising (i) at least one silicone compound, such as silicone resin, such as a reactive silicone resin, such as a reactive silicone resin chosen from the group of polyalkylethoxysiloxane, polymethylethoxysiloxane, polyphenyl-ethoxysiloxane, polyphenylsiloxane, polyphenylmethylsiloxane, and (ii) at least one hardener, such as silane, such as alkyltriethoxysilane, such as octyltriethoxysilane, and (iii) at least one emulsifier wherein the hydrophobic agent comprises (i) in an amount of 20 to 90 percent by weight, in particular 30 to 60 percent by weight, based on the weight of the hydrophobic agent, and (ii) in an amount of 0.5 to 10 percent by weight, in particular 1 to 5 percent by weight, based on the total weight of the hydrophobic agent, wherein the mineral wool product comprises the hydrophobic agent in an amount of 0.05 to 2 percent by weight, such as 0.10 to 1 percent by weight, such as 0.15 to 0.8 percent by weight, based on the weight of the mineral wool product.

The present inventors have surprisingly found that a very specific hydrophobic agent can impart properties to a mineral wool binder which allow the use of a mineral wool product prepared from mineral fibers bound by such a binder as an insulation of a metallic structure and at the same time avoid problems with corrosion under insulation, associated with previously-known insulation products.

### Description of the Preferred Embodiments

The present invention is directed to a use of a mineral wool product comprising mineral fibers bound by a binder resulting from the curing of a binder composition comprising a phenol-formaldehyde-based resin, and/or a carbohydrate containing component, a hydrophobic agent comprising (i) at least one silicone compound, such as silicone resin, such as a reactive silicone resin, such as a reactive silicone resin chosen from the group of polyalkylethoxysiloxane, polymethylethoxysiloxane, polyphenylethoxy-siloxane, polyphenylsiloxane, polyphenylmethylsiloxane, and (ii) at least one hardener, such as silane, such as alkyltriethoxysilane, such as octyltriethoxysilane, and (iii) at least one emulsifier, as insulation of a metallic structure, said structure having an operating temperature between 70-650 °C, wherein the hydrophobic agent comprises (i) in an amount of 20 to 90 percent by weight, in particular 30 to 60 percent by weight, based on the weight of the hydrophobic agent, and (ii) in an amount of 0.5 to 10 percent by weight, in particular 1 to 5 percent by weight, based on the total weight of the hydrophobic agent, wherein the mineral wool product comprises the hydrophobic agent in an amount of 0.05 to 2 percent by weight, such as 0.10 to 1 percent by weight, such as 0.15 to 0.8 percent by weight, based on the weight of the mineral wool product.

### Hydrophobic Agent

The present inventors have surprisingly found that by the use of the very specific hydrophobic agent described herein, corrosion problems in form of corrosion under insulation can be avoided. Without wanting to be bound to any specific theory, the present inventors assume that the corrosion problems associated with the previously-known use of insulation elements for metal structures are connected to the so-called wicking-effect of such insulation products. This wicking effect of the insulation products causes moisture, once it has entered the system, to be retained for a prolonged period of time at the surface of the metal structure. Accordingly, such insulation materials prolong the time during which the surface of the metal structure is kept in contact with water which contributes to an increased rate of corrosion, in particular at higher temperatures

Without wanting to be bound to any specific theory the present inventors assume that the use of the very specific hydrophobic agent described herein allows a quicker dry out time which allows an inhibition of corrosion.

It has now surprisingly been found that by use of mineral wool products prepared from a binder containing the hydrophobic agent described herein, excellent insulation characteristics can be attained while at the same time the corrosion under insolation is effectively inhibited.

According to the invention, the hydrophobic agent comprises (i) in an amount of 20 to 90 percent by weight, in particular 30 to 60 percent by weight, based on the weight of the hydrophobic agent.

In one embodiment, the hydrophobic agent comprises (i) in form of polymethylethoxysiloxane.

According to the invention, the hydrophobic agent comprises (ii) in an amount of 0.5 to 10 percent by weight, in particular 1 to 5 percent by weight, based on the total weight of the hydrophobic agent.

In one embodiment, the hydrophobic agent comprises (ii) in form of octyltriethoxysilane.

In an alternative embodiment not according to the invention, the silicone compound component (i) also serves as the hardener component (ii) of the hydrophobic agent. Accordingly, in this alternative embodiment, the hydrophobic agent comprises at least one silicone compound, such as silicone resin, such as a reactive silicone resin, such as a reactive silicone resin chosen from the group of polyalkylethoxysiloxane, polymethylethoxysiloxane, polyphenylethoxysiloxane, polyphenylsiloxane, polyphenylmethylsiloxane, and at least one emulsifier.

Accordingly the hardener is another compound than the silicone compound.

In one embodiment, the hydrophobic agent comprises (i) in an amount of 30 to 60 percent by weight, (ii) in an amount of 1 to 5 percent by weight, based on the total weight of the hydrophobic agent, the remainder being (iii) and optionally other components and trace amounts of ethanol.

In one embodiment, the hydrophobic agent comprises polymethylethoxysiloxane in an amount of 30 to 60 percent by weight, octyltriethoxysilane in an amount of 1 to 5 percent by weight, based on the total weight of the hydrophobic agent, the remainder being (iii) and optionally other components and trace amounts of ethanol.

According to the invention, the binder composition comprises the hydrophobic agent in an amount of 0.05 to 2 percent by weight, such as 0.10 to 1 percent by weight, such as 0.15 to 0.8 percent by weight, based on the weight of the aqueous binder composition mineral wool product.

In one embodiment, the binder composition comprises a carbohydrate-containing binder component, wherein the binder component further comprises (a) a polycarboxylic acid component or any salt thereof and/or an inorganic acid or any salt thereof, and/or (b) a component selected from the group consisting of amine compounds, ammonia; and optionally, and/or (c) a reaction product of a polycarboxylic acid component or anhydride thereof and an alkanolamine component.

In one embodiment, the mineral wool product is a pipe section or a mat or wired mat.

### Mineral Wool Product

The mineral fibres employed for the production of the mineral wool products may be any of man-made vitreous fibres (MMVF), glass fibres, ceramic fibres, basalt fibres, slag fibres, stone fibres and others. These fibres may be present as a wool product, e.g. like a stone wool product.

The present invention is directed to a mineral wool product comprising mineral fibers bound by a binder resulting from the curing of a binder composition comprising a phenol-formaldehyde-based resin, and/or a carbohydrate-containing component, a hydrophobic agent comprising: (i) at least one silicone compound, such as silicone resin, such as a reactive silicone resin, such as a reactive silicone resin chosen from the group of polyalkylethoxysiloxane, polymethylethoxysiloxane, polyphenylethoxysiloxane, polyphenylsiloxane, polyphenylmethylsiloxane, and (ii) at least one hardener, such as silane, such as alkyltriethoxysilane, such as octyltriethoxysilane, and (iii) at least one emulsifier wherein the hydrophobic agent comprises (i) in an amount of 20 to 90 percent by weight, in particular 30 to 60 percent by weight, based on the weight of the hydrophobic agent, and (ii) in an amount of 0.5 to 10 percent by weight, in particular 1 to 5 percent by weight, based on the total weight of the hydrophobic agent, and wherein the mineral wool product comprises the hydrophobic agent in an amount of 0.05 to 2 percent by weight, such as 0.10 to 1 percent by weight, such as 0.15 to 0.8 percent by weight, based on the weight of the mineral wool product.

According to the invention, the hydrophobic agent comprises (i) in an amount of 20 to 90 percent by weight, in particular 30 to 60 percent by weight, based on the weight of the hydrophobic agent.

In one embodiment, the hydrophobic agent comprises (i) in form of polymethylethoxysiloxane.

According to the invention, the hydrophobic agent comprises (ii) in an amount of 0.5 to 10 percent by weight, in particular 1 to 5 percent by weight, based on the total weight of the hydrophobic agent.

In one embodiment, the hydrophobic agent comprises (ii) in form of octyltriethoxysilane.

In an alternative embodiment not according to the invention, the silicone compound component (i) also serves as the hardener component (ii) of the hydrophobic agent. Accordingly, in this alternative embodiment, the hydrophobic agent comprises at least one silicone compound, such as silicone resin, such as a reactive silicone resin, such as a reactive silicone resin chosen from the group of polyalkylethoxysiloxane, polymethylethoxysiloxane, polyphenylethoxysiloxane, polyphenylsiloxane, polyphenylmethylsiloxane, and at least one emulsifier.

Accordingly, the hardener is another compound than the silicone compound.

In one embodiment, the hydrophobic agent comprises (i) in an amount of 30 to 60 percent by weight, (ii) in an amount of 1 to 5 percent by weight, based on the total weight of the hydrophobic agent, the remainder being (iii) and optionally other components and trace amounts of ethanol.

In one embodiment, the hydrophobic agent comprises polymethylethoxysiloxane in an amount of 30 to 60 percent by weight, octyltriethoxysilane in an amount of 1 to 5 percent by weight, based on the total weight of the hydrophobic agent, the remainder being (iii) and optionally other components and trace amounts of ethanol.

According to the invention, the mineral wool product comprises the hydrophobic agent in an amount of 0.05 to 2 percent by weight, such as 0.10 to 1 percent by weight, such as 0.15 to 0.8 percent by weight, based on the weight of the mineral wool product.

In one embodiment, the binder composition comprises a carbohydrate-containing binder component, wherein the binder composition further comprises (a) a polycarboxylic acid component or any salt thereof and/or an inorganic acid or any salt thereof, and/or (b) a component selected from the group consisting of amine compounds, ammonia; and optionally, and/or (c) a reaction product of a polycarboxylic acid component or anhydride thereof and an alkanolamine component.

In one embodiment the mineral wool product is in form of an insulation product for thermal insulation of metallic structures.

In one embodiment the mineral wool product is in form of a pipe section or a mat or wired mat.

Pipe sections are pre-formed (formed in the factory) insulation materials used for the insulation around pipes.

A typical embodiment of such a pipe section is a mandrel wound pipe section.

A mandrel wound pipe section is a pre-formed, full-round cylindrical pipe insulation product which is produced by wrapping an uncured mineral wool blanket around a mandrel in spiral manner for forming and subsequent curing. The cylindrical pipe sections are split and hinged for easy snap-on assembly. Mandrel wound pipe sections can be both faced and un-faced with aluminum foil.

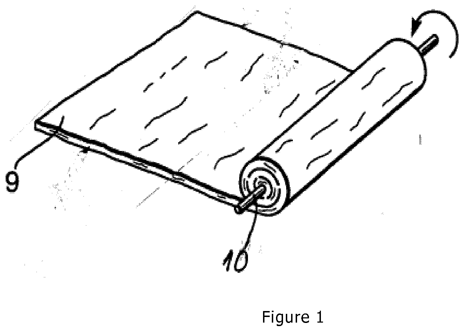

Figure 1 shows how such a mandrel wound pipe section is typically produced. In this method, the pipe section is wound from a thin web 9 of mineral wool, preferably stone wool. The web 9 is wound around a perforated mandrel 10 as it is known when producing wound pipe sections. After winding hot air is conventionally blown from inside the mandrel and through the wound pipe section for curing of the thermoset binder.

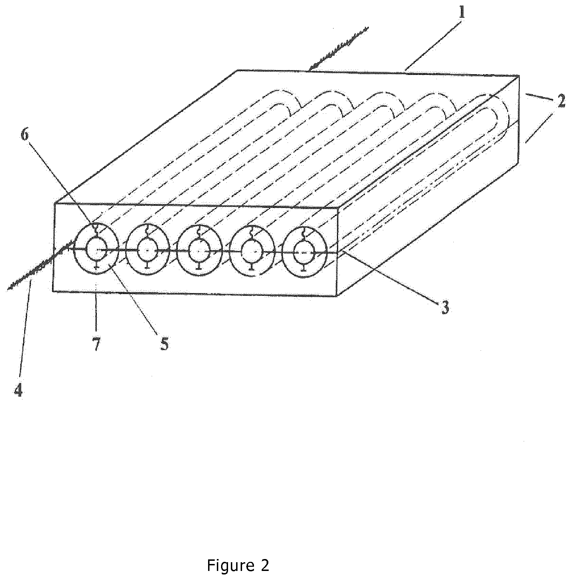

An alternative embodiment of a pre-formed pipe section is shown in figure 2.

Figures 2 illustrates a block (1) bonded mineral wool and a cutting string (4) by means of which pipe sections (5) having a tongue/groove-joint (6) and a T-shaped hinge slit (7) are cut out of the block in the transverse direction of the block and parallel to the main surface planes of the block. After cutting out each pipe section 5 is removed from the block.

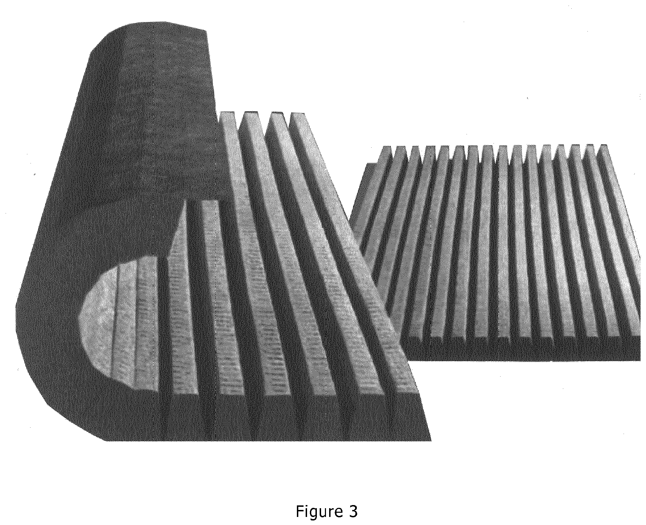

A further embodiment of a pipe insulation is shown in figure 3, which shows a mat of mineral wool provided with transversally extending V-grooves. Due to the V-grooves the mat can be wrapped around a pipe on site as indicated in the version shown at the front in figure 3.

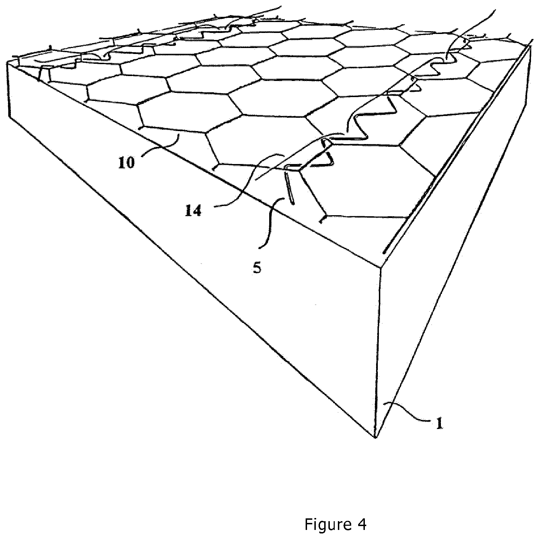

An alternative embodiment is a mineral wool product in form of a wired mat. Figure 4 is an ilustration of such a wired mat.

Figure 4 illustrates in perspective view such a wired mat according to the invention where an insulation layer 1 in terms of a mineral fibre web is provided with a chicken wire 10 which is fastened to the insulating layer 1 by means of an iron thread 14 stitched through the insulating layer. A fixation means 5 in terms of a galvanised iron wire may be in zigzag configuration and placed under the chicken wire 10. In an alternative embodiment, no such fixation means are included.

In a further alternative embodiment, mats are used without any wiring. In this alternative embodiment, the mineral wool product is in form of a mineral wool mat - sometimes also called a slab.

Figure 5 shows how a wired mat according to figure 4 is mounted on a pipe as insulation material.

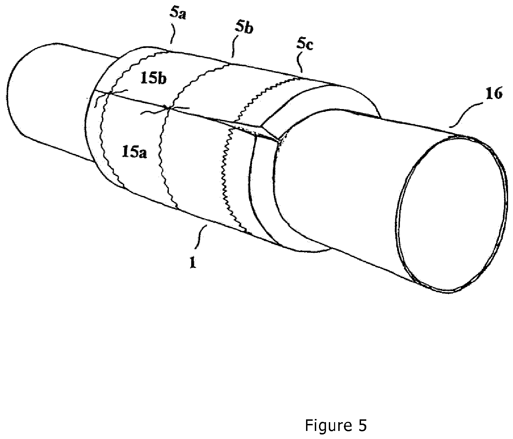

Figure 5 illustrates an embodiment of the insulating product according to the invention mounted on a pipe 16, where the product comprising insulating layer 1 is adapted to fit the circumference of pipe 16 and fixation means 5a and 5b extending around the mounted product secures the product on the pipe 16 by knots 15a and 15b. The fixation means 5c has not yet been extended to protrude beyond the adjoining end surfaces of the product to enable the fixation thereby.

In one embodiment the mineral wool product has a water absorption according to ASTM C1763-16 of less than 4.0 vol. %, such as less than 2.0 vol. %, such as less than 1.5 vol. %.

In one embodiment the mineral wool product has a water absorption according to EN13472 of less than 1.0 kg/m2, such as less than 0.8 kg/m2, such as less than 0.5 kg/m2, such as less than 0.3 kg/m2.

In one embodiment the mineral wool product has water absorption according to EN13472 of less than 1.0 kg/m2, such as less than 0.8 kg/m2, such as less than 0.5 kg/m2, such as less than 0.3 kg/m2, following storage of the mineral wool product at 250°C for 24 hours.

In this embodiment, in which the water absorption according to EN13472 is measured following storage of the mineral wool product at 250°C for 24 hours, the following protocol for exposing the product to 250°C for 24 hours is followed:
- Pre-heat a laboratory furnace to 250 °C, which is placed under a fume hood.
- Place the samples in the furnace for a period of 24 hours.
- The ventilation of the furnace shall be off, except from the last 30 minutes of the heating when the ventilation shall be on in order to remove fumes from the furnace in a safe way.
- Remove the samples from the furnace and let them cool down to ambient temperature.
- After that proceed with the requested test program for water absorption.

In one embodiment, the mineral wool product according to the present invention has a density of 20 to 150 kg/m³, such as 40 to 130 kg/m³, such as 60-120 kg/m³.

The present invention is further illustrated by the following examples:

### Examples

Different insulation products were tested with regard to water absorption properties according to the standard ASTM C1763-16 test method.

The results of tests are stated in Table 1.

| Sample | Density kg/m³ | Volume cm³ | Mass, initial g | Mass, after immersion (2 hr) g | Mass, recondition (after 48 hr) g | Water Abs. (WA) vol.% | Recovery WA, 2 hr vol.% | Recovery WA, 48 hr vol.% |
|---|---|---|---|---|---|---|---|---|
| Roxul SL960, mat | 92 | 4532 | 415.69 | 658.47 | 415.82 | 5.4 | 4.9 | 0.003 |
| E-glass, pipe section | 234 | 2755 | 646.09 | 3166.03 | 2599.29 | 22.9 | 22.6 | 17.73 |
| Roxul, pipe section with Silicone resin BS45 | 73 | 2162 | 158.14 | 183.88 | 158.93 | 1.2 | 0.5 | 0.037 |
| Mineral wool, pipe section | 145 | 2427 | 350.88 | 832.86 | 438.04 | 5.0 | 4.8 | 0.898 |
| Roxul PS980, pipe section | 183 | 1776 | 325.90 | 806.37 | 556.76 | 6.8 | 6.6 | 3.249 |
| Mineral wool, mat | 80 | 7582 | 606.86 | 2040.20 | 1269.98 | 18.9 | 18.2 | 8.746 |

Pipe sections were tested with regard to water absorption properties according to the standard EN13472. The pipe sections were manufactured as a mandrel wound pipe section and are from the ProRox product series and the tested specimen had a thickness of 50 mm.

The tests were done on both untreated products and products that were aged (250°C/24h).

SILRES BS 45 silicon resin from Wacker had been added to the products in amount of 0.41 wt. %.

The results from a triple-determination are stated in Table 2.

**Table 2.**

| Sample | Water Absorption level according to the EN13472 standard, | Water Absorption level according to the EN13472 standard, |
|---|---|---|
| | Initial | Aged (24h, 250°C) |
| | kg/m² | kg/m² |
| ProRox 960 | 0.09 | 0.08 |

## Claims

1. Use of a mineral wool product comprising mineral fibers bound by a binder resulting from the curing of a binder composition comprising
a phenol-formaldehyde-based resin, and/or a carbohydrate containing component; and
a hydrophobic agent comprising:
(i) at least one silicone compound, such as silicone resin, such as a reactive silicone resin, such as a reactive silicone resin chosen from the group of polyalkylethoxysiloxane, polymethylethoxysiloxane, polyphenylethoxysiloxane, polyphenylsiloxane, polyphenylmethylsiloxane;
(ii) at least one hardener, such as silane, such as alkyltriethoxysilane, such as octyltriethoxysilane; and
(iii) at least one emulsifier;
as insulation of a metallic structure, said structure having an operating temperature between 70-650 °C,
wherein the hydrophobic agent comprises
(i) in an amount of 20 to 90 percent by weight, in particular 30 to 60 percent by weight, based on the weight of the hydrophobic agent, and
(ii) in an amount of 0.5 to 10 percent by weight, in particular 1 to 5 percent by weight, based on the total weight of the hydrophobic agent, and
wherein the mineral wool product comprises the hydrophobic agent in an amount of 0.05 to 2 percent by weight, such as 0.10 to 1 percent by weight, such as 0.15 to 0.8 percent by weight, based on the weight of the mineral wool product.

2. Use according to claim 1, wherein the hydrophobic agent comprises (i) in an amount of 30 to 60 percent by weight, (ii) in an amount of 1 to 5 percent by weight, based on the total weight of the hydrophobic agent, the remainder being (iii) and optionally other components and trace amounts of ethanol.

3. Use according to claim 1 or 2, wherein the hydrophobic agent comprises polymethylethoxysiloxane in an amount of 30 to 60 percent by weight, octyltriethoxysilane in an amount of 1 to 5 percent by weight, based on the total weight of the hydrophobic agent, the remainder being (iii) and optionally other components and trace amounts of ethanol.

4. Use according to any one of the preceding claims, wherein the binder composition comprises a carbohydrate-containing binder component, wherein the binder composition further comprises
(a) a polycarboxylic acid component or any salt thereof and/or an inorganic acid or any salt thereof, and/or
(b) a component selected from the group consisting of amine compounds, ammonia; and optionally, and/or
(c) a reaction product of a polycarboxylic acid component or anhydride thereof and an alkanolamine component.

5. Use according to any one of the preceding claims, wherein the mineral wool product is a pipe section or a mat or wired mat.

6. A mineral wool product comprising mineral fibers bound by a binder resulting from the curing of a binder composition comprising
a phenol-formaldehyde-based resin, and/or a carbohydrate-containing component; and
a hydrophobic agent comprising:
(i) at least one silicone compound, such as silicone resin, such as a reactive silicone resin, such as a reactive silicone resin chosen from the group of polyalkylethoxysiloxane, polymethylethoxysiloxane, polyphenylethoxysiloxane, polyphenylsiloxane, polyphenylmethylsiloxane;
(ii) at least one hardener, such as silane, such as alkyltriethoxysilane, such as octyltriethoxysilane; and
(iii) at least one emulsifier,
wherein the hydrophobic agent comprises
(i) in an amount of 20 to 90 percent by weight, in particular 30 to 60 percent by weight, based on the weight of the hydrophobic agent, and
(ii) in an amount of 0.5 to 10 percent by weight, in particular 1 to 5 percent by weight, based on the total weight of the hydrophobic agent, and
wherein the mineral wool product comprises the hydrophobic agent in an amount of 0.05 to 2 percent by weight, such as 0.10 to 1 percent by weight, such as 0.15 to 0.8 percent by weight, based on the weight of the mineral wool product.

7. A mineral wool product according to claim 6, wherein the hydrophobic agent comprises (i) in an amount of 30 to 60 percent by weight, (ii) in an amount of 1 to 5 percent by weight, based on the total weight of the hydrophobic agent, the remainder being (iii) and optionally other components and trace amounts of ethanol.

8. A mineral wool product according to any one of the claims 6 or 7, wherein the hydrophobic agent comprises polymethylethoxysiloxane in an amount of 30 to 60 percent by weight, octyltriethoxysilane in an amount of 1 to 5 percent by weight, based on the total weight of the hydrophobic agent, the remainder being (iii) and optionally other components and trace amounts of ethanol.

9. A mineral wool product according to any one of the claims 6 to 8, having a water absorption according to ASTM C1763-16 of less than 4.0 vol.%, such as less than 2.0 vol.%, such as less than 1.5 vol.%.

10. A mineral wool product according to any one of the claims 6 to 9, having a water absorption according to EN13472 of less than 0.5 kg/m², such as less than 0.3 kg/m².

11. A mineral wool product according to any one of the claims 6 to 10, having a water absorption according to EN13472 of less than 1.0 kg/m², such as less than 0.8 kg/m², such as less than 0.5 kg/m², such as less than 0.3 kg/m², following storage of the mineral wool product at 250°C for 24 hours.

## Patentansprüche

1. Verwendung eines Mineralwolleprodukts, umfassend Mineralfasern, die durch ein Bindemittel gebunden sind, das aus dem Aushärten einer Bindemittelzusammensetzung resultiert, umfassend
ein Harz auf Phenol-Formaldehyd-Basis und/oder eine kohlenhydrathaltige Komponente; und
ein hydrophobes Mittel, umfassend:
(i) mindestens eine Silikonverbindung, wie ein Silikonharz, wie ein reaktives Silikonharz, wie ein reaktives Silikonharz, ausgewählt aus der Gruppe Polyalkylethoxysiloxan, Polymethylethoxysiloxan, Polyphenylethoxysiloxan, Polyphenylsiloxan, Polyphenylmethylsiloxan;
(ii) mindestens einen Härter, wie Silan, wie Alkyltriethoxysilan, wie Octyltriethoxysilan; und
(iii) mindestens einen Emulgator;
als Isolierung einer metallischen Struktur, wobei die Struktur eine Betriebstemperatur zwischen 70 und 650 °C aufweist,
wobei das hydrophobe Mittel
(i) in einer Menge von 20 bis 90 Gew.-%, insbesondere 30 bis 60 Gew.-%, bezogen auf das Gewicht des hydrophoben Mittels, und
(ii) in einer Menge von 0,5 bis 10 Gew.-%, insbesondere 1 bis 5 Gew.-%, bezogen auf das Gesamtgewicht des hydrophoben Mittels, und
wobei das Mineralwolleprodukt das hydrophobe Mittel in einer Menge von 0,05 bis 2 Gew.-%, wie 0,10 bis 1 Gew.-%, wie 0,15 bis 0,8 Gew.-%, bezogen auf das Gewicht des Mineralwolleprodukts, umfasst.

2. Verwendung gemäß Anspruch 1, wobei das hydrophobe Mittel (i) in einer Menge von 30 bis 60 Gew.-%, (ii) in einer Menge von 1 bis 5 Gew.-%, bezogen auf das Gesamtgewicht des hydrophoben Mittels, umfasst, wobei der Rest (iii) und gegebenenfalls andere Komponenten und Spurenmengen Ethanol sind.

3. Verwendung gemäß Anspruch 1 oder 2, wobei das hydrophobe Mittel Polymethylethoxysiloxan in einer Menge von 30 bis 60 Gew.-% und Octyltriethoxysilan in einer Menge von 1 bis 5 Gew.-%, bezogen auf das Gesamtgewicht des hydrophoben Mittels, umfasst, wobei der Rest (iii) und gegebenenfalls andere Komponenten und Spurenmengen Ethanol sind.

4. Verwendung gemäß einem der vorhergehenden Ansprüche, wobei die Bindemittelzusammensetzung eine kohlenhydrathaltige Bindemittelkomponente umfasst, wobei die Bindemittelzusammensetzung ferner umfasst
(a) eine Polycarbonsäurekomponente oder ein beliebiges Salz davon und/oder eine anorganische Säure oder ein beliebiges Salz davon und/oder
(b) eine Komponente, ausgewählt aus der Gruppe, bestehend aus Aminverbindungen, Ammoniak; und gegebenenfalls und/oder
(c) einem Reaktionsprodukt einer Polycarbonsäurekomponente oder eines Anhydrids davon und einer Alkanolaminkomponente.

5. Verwendung gemäß einem der vorstehenden Ansprüche, wobei das Mineralwolleprodukt ein Rohrabschnitt oder eine Matte oder Drahtmatte ist.

6. Mineralwolleprodukt, umfassend Mineralfasern, die durch ein Bindemittel gebunden sind, das aus dem Aushärten einer Bindemittelzusammensetzung resultiert, umfassend
ein Harz auf Phenol-Formaldehyd-Basis und/oder eine kohlenhydrathaltige Komponente; und
ein hydrophobes Mittel, umfassend:
(i) mindestens eine Silikonverbindung, wie ein Silikonharz, wie ein reaktives Silikonharz, wie ein reaktives Silikonharz, ausgewählt aus der Gruppe Polyalkylethoxysiloxan, Polymethylethoxysiloxan, Polyphenylethoxysiloxan, Polyphenylsiloxan, Polyphenylmethylsiloxan;
(ii) mindestens einem Härter, wie Silan, wie Alkyltriethoxysilan, wie Octyltriethoxysilan; und
(iii) mindestens einem Emulgator,
wobei das hydrophobe Mittel
(i) in einer Menge von 20 bis 90 Gew.-%, insbesondere 30 bis 60 Gew.-%, bezogen auf das Gewicht des hydrophoben Mittels, und
(ii) in einer Menge von 0,5 bis 10 Gew.-%, insbesondere 1 bis 5 Gew.-%, bezogen auf das Gesamtgewicht des hydrophoben Mittels, umfasst, und wobei das Mineralwolleprodukt das hydrophobe Mittel in einer Menge von 0,05 bis 2 Gew.-%, wie 0,10 bis 1 Gew.-%, wie 0,15 bis 0,8 Gew.-%, bezogen auf das Gewicht des Mineralwolleprodukts, umfasst.

7. Mineralwolleprodukt gemäß Anspruch 6, wobei das hydrophobe Mittel (i) in einer Menge von 30 bis 60 Gew.-%, (ii) in einer Menge von 1 bis 5 Gew.-%, bezogen auf das Gesamtgewicht des hydrophoben Mittels, umfasst, wobei der Rest (iii) und gegebenenfalls andere Komponenten und Spurenmengen Ethanol sind.

8. Mineralwolleprodukt gemäß einem der Ansprüche 6 oder 7, wobei das hydrophobe Mittel Polymethylethoxysiloxan in einer Menge von 30 bis 60 Gew.-% und Octyltriethoxysilan in einer Menge von 1 bis 5 Gew.-%, bezogen auf das Gesamtgewicht des hydrophoben Mittels, umfasst, wobei der Rest (iii) und gegebenenfalls andere Komponenten und Spurenmengen Ethanol sind.

9. Mineralwolleprodukt gemäß einem der Ansprüche 6 bis 8 mit einer Wasseraufnahme gemäß ASTM C1763-16 von weniger als 4,0 Vol.-%, wie beispielsweise weniger als 2,0 Vol.-%, wie beispielsweise weniger als 1,5 Vol.-%.

10. Ein Mineralwolleprodukt gemäß einem der Ansprüche 6 bis 9 mit einer Wasseraufnahme gemäß EN13472 von weniger als 0,5 kg/m2, wie z. B. weniger als 0,3 kg/m².

11. Ein Mineralwolleprodukt gemäß einem der Ansprüche 6 bis 10 mit einer Wasseraufnahme gemäß EN13472 von weniger als 1,0 kg/m², wie weniger als 0,8 kg/m², wie weniger als 0,5 kg/m², wie weniger als 0,3 kg/m², nach Lagerung des Mineralwolleprodukts bei 250 °C für 24 Stunden.

## Revendications

1. Utilisation d'un produit de laine minérale comprenant des fibres minérales liées par un liant résultant du durcissement d'une composition de liant comprenant
une résine à base de phénol-formaldéhyde, et/ou un composant contenant des hydrates de carbone ; et
un agent hydrophobe comprenant :
(i) au moins un composé de silicone, tel qu'une résine de silicone, telle qu'une résine de silicone réactive, telle qu'une résine de silicone réactive choisie dans le groupe constitué de polyalkyléthoxysiloxane, polyméthyléthoxysiloxane, polyphényléthoxysiloxane, polyphénylsiloxane, polyphénylméthylsiloxane ;
(ii) au moins un durcisseur, tel qu'un silane, tel qu'un alkyltriéthoxysilane, tel qu'un octyltriéthoxysilane ; et
(iii) au moins un émulsifiant ;
comme isolant d'une structure métallique, ladite structure ayant une température de fonctionnement entre 70 et 650 °C,
dans laquelle l'agent hydrophobe est compris
(i) dans une quantité de 20 à 90 pour cent en poids, en particulier 30 à 60 pour cent en poids, rapportée au poids de l'agent hydrophobe, et
(ii) dans une quantité de 0,5 à 10 pour cent en poids, en particulier 1 à 5 pour cent en poids, rapportée au poids total de l'agent hydrophobe, et
dans laquelle le produit de laine minérale comprend l'agent hydrophobe dans une quantité de 0,05 à 2 pour cent en poids, telle que 0,10 à 1 pour cent en poids, telle que 0,15 à 0,8 pour cent en poids, rapportée au poids du produit de laine minérale.

2. Utilisation selon la revendication 1, dans laquelle l'agent hydrophobe est compris (i) dans une quantité de 30 à 60 pour cent en poids, (ii) dans une quantité de 1 à 5 pour cent en poids, rapportée au poids total de l'agent hydrophobe, le reste étant (iii) et facultativement d'autres composants et des quantités à l'état de trace d'éthanol.

3. Utilisation selon la revendication 1 ou 2, dans laquelle l'agent hydrophobe comprend du polyméthyléthoxysiloxane dans une quantité de 30 à 60 pour cent en poids, de l'octyltriéthoxysilane dans une quantité de 1 à 5 pour cent en poids, rapportée au poids total de l'agent hydrophobe, le reste étant (iii) et facultativement d'autres composants et des quantités à l'état de trace d'éthanol.

4. Utilisation selon l'une quelconque des revendications précédentes, dans laquelle la composition de liant comprend un composant de liant contenant des hydrates de carbone, dans laquelle la composition de liant comprend en outre
(a) un composant acide polycarboxylique ou un sel quelconque de celui-ci et/ou un acide inorganique ou un sel quelconque de celui-ci, et/ou
(b) un composant choisi dans le groupe consistant en des composés amine, l'ammoniaque ; et facultativement, et/ou
(c) un produit de réaction d'un composant acide polycarboxylique ou d'un anhydride de celui-ci et d'un composant alcanolamine.

5. Utilisation selon l'une quelconque des revendications précédentes, dans laquelle le produit de laine minérale est un tronçon de tuyau ou une nappe ou une nappe grillagée.

6. Produit de laine minérale comprenant des fibres minérales liées par un liant résultant du durcissement d'une composition de liant comprenant
une résine à base de phénol-formaldéhyde, et/ou un composant contenant des hydrates de carbone ; et
un agent hydrophobe comprenant :
(i) au moins un composé silicone, tel qu'une résine de silicone, telle qu'une résine de silicone réactive, telle qu'une résine de silicone réactive choisie dans le groupe constitué de polyalkyléthoxysiloxane, polyméthyléthoxysiloxane, polyphényléthoxysiloxane, polyphénylsiloxane, polyphénylméthylsiloxane ;
(ii) au moins un durcisseur, tel qu'un silane, tel qu'un alkyltriéthoxysilane, tel qu'un octyltriéthoxysilane ; et
(iii) au moins un émulsifiant,
dans lequel l'agent hydrophobe est compris
(i) dans une quantité de 20 à 90 pour cent en poids, en particulier 30 à 60 pour cent en poids, rapportée au poids de l'agent hydrophobe, et
(ii) dans une quantité de 0,5 à 10 pour cent en poids, en particulier 1 à 5 pour cent en poids, rapportée au poids total de l'agent hydrophobe, et
dans lequel le produit de laine minérale comprend l'agent hydrophobe dans une quantité de 0,05 à 2 pour cent en poids, telle que 0,10 à 1 pour cent en poids, telle que 0,15 à 0,8 pour cent en poids, rapportée au poids du produit de laine minérale.

7. Produit de laine minérale selon la revendication 6, dans lequel l'agent hydrophobe est compris (i) dans une quantité de 30 à 60 pour cent en poids, (ii) dans une quantité de 1 à 5 pour cent en poids, rapportée au poids total de l'agent hydrophobe, le reste étant (iii) et facultativement d'autres composants et des quantités à l'état de trace d'éthanol.

8. Produit de laine minérale selon l'une quelconque des revendications 6 ou 7, dans lequel l'agent hydrophobe comprend du polyméthyléthoxysiloxane dans une quantité de 30 à 60 pour cent en poids, de l'octyltriéthoxysilane dans une quantité de 1 à 5 pour cent en poids, rapportée au poids total de l'agent hydrophobe, le reste étant (iii) et facultativement d'autres composants et des quantités à l'état de trace d'éthanol.

9. Produit de laine minérale selon l'une quelconque des revendications 6 à 8, ayant une absorption d'eau selon ASTM C1763-16 inférieure à 4,0 % en volume, telle qu'inférieure à 2,0 % en volume, telle qu'inférieure à 1,5 % en volume.

10. Produit de laine minérale selon l'une quelconque des revendications 6 à 9, ayant une absorption d'eau selon EN13472 inférieure à 0,5 kg/m², telle qu'inférieure à 0,3 kg/m².

11. Produit de laine minérale selon l'une des revendications 6 à 10, ayant une absorption d'eau selon EN13472 inférieure à 1,0 kg/m², telle qu'inférieure à 0,8 kg/m², telle qu'inférieure à 0,5 kg/m², telle qu'inférieure à 0,3 kg/m², après stockage du produit de laine minérale à 250 °C pendant 24 heures.
